# EUROPÄISCHE PATENTSCHRIFT

(11) **EP 2 858 860 B1**
(45) Veröffentlichungstag und Bekanntmachung des Hinweises auf die Patenterteilung: **28.12.2016**
(21) Anmeldenummer: 13737528.3
(22) Anmeldetag: 05.06.2013
(51) Int. Cl.: B60R 25/021, H01H 27/06

(54) **ANLASSERWIEDERHOLSPERRE**
STARTER ANTIREPEAT DEVICE
ANTI-RÉPÉTITIF DE DÉMARRAGE

(30) Priorität: 06.06.2012 DE 102012011193
(43) Veröffentlichungstag der Anmeldung: 15.04.2015
(73) Patentinhaber: Huf Hülsbeck & Fürst GmbH & Co. KG, 42551 Velbert (DE)
(72) Erfinder: TRISCHBERGER, Werner, 85229 Langenpettenbach (DE)
(74) Vertreter: Schäfer, Matthias W.
(86) Internationale Anmeldenummer: PCT/DE2013/000306
(87) Internationale Veröffentlichungsnummer: WO 2013/182184

(56) Entgegenhaltungen:
- EP-A1- 2 253 519
- WO-A1-2012/042064
- DE-A1- 2 327 529
- DE-A1- 2 433 877
- DE-U- 6 905 689
- FR-A1- 2 763 421

## Beschreibung

### Gebiet der Erfindung

Die Erfindung betrifft eine Anlasserwiederholsperre zur Ansteuerung eines Zündanlassschalters, die eine erneute Aktivierung eines bereits laufenden Motors verhindert.

### Stand der Technik

Aus der EP 2 253 519 A1 ist eine Vorrichtung zur Ansteuerung eines Sperrgliedes einer Lenkspindel eines Kraftfahrzeugs bekannt. Darin ist eine Anlasserwiederholsperre bestehend unter anderem aus einem Blockierelement, einem Federelement und einem Schaltring bekannt. Da es sich hierbei um verschiedene und komplizierte Druckgussteile handelt, ist nicht nur die Herstellung, sondern auch die Montage aufwendig, fehleranfällig und teuer.

DE 24 33 877 A1 bildet weiterer Stand der Technik.

Der Erfindung liegt die Aufgabe zugrunde, eine Anlasserwiederholsperre zur Verfügung zu stellen, welche die Nachteile des Standes der Technik vermeidet, die einfach aufgebaut und damit kostengünstig zu fertigen ist, eine kompakte Bauform aufweist, bei gleichzeitiger Teilereduktion mit einfachen und kostengünstigen Einzelteilen herzustellen ist, bei sicherer Fehlervermeidung vereinfacht zu montieren ist, und somit die Gesamtkosten senkt.

Diese Aufgabe wird durch eine Anlasserwiederholsperre zur Ansteuerung eines Zündanlassschalters mit den Merkmalen des Anspruchs 1 gelöst.

Vorteilhafte Ausführungsformen und Weiterbildungen der Erfindung werden in den Unteransprüchen beschrieben.

Dabei ist erfindungsgemäß vorgesehen, dass eine mechanische Anlasserwiederholsperre zur Ansteuerung eines Zündanlassschalters, die eine erneute Aktivierung eines bereits laufenden Motors verhindert, folgendes aufweist:
- ein erstes Eingriffselement, welches eine Pendelstiftaufnahme für einen Pendelstift aufweist, wobei der Pendelstift teilweise aus der Pendelstiftaufnahme hervorsteht und pendelnd bewegbar ist, und
- ein zweites Eingriffselement, wobei das zweite Eingriffselement eine Steuerkulisse aufweist, wobei das erste Eingriffselement und das zweite Eingriffselement koaxial zueinander angeordnet sind, wobei zumindest das erste Eingriffselement oder das zweite Eingriffselement um die gemeinsame Achse drehbar ist und wobei,
- wenn sich der Pendelstift entgegen einer Bewegungsrichtung des ersten bzw. zweiten Eingriffselements in Umfangsrichtung abstützt und sich in Eingriff mit der Steuerkulisse befindet, eine Drehbewegung des ersten Eingriffselements gegenüber dem zweiten Eingriffselement bei laufendem Motor in eine Startstellung bzw. dritte Position verhindert wird.

Hierdurch wird eine Anlasserwiederholsperre zur Verfügung gestellt, welche die Nachteile des Standes der Technik vermeidet, die einfach aufgebaut und damit kostengünstig zu fertigen ist, eine kompakte Bauform aufweist, bei gleichzeitiger Teilereduktion mit einfachen und kostengünstigen Einzelteilen herzustellen ist, bei sicherer Fehlervermeidung vereinfacht zu montieren ist, und somit die Gesamtkosten senkt.

Alternativ kann die Anlasserwiederholsperre für einen Zündanlassschalter (ZAS) mit einer mechanischen Lenkverriegelung (MLV) kombiniert werden.

Die Anlasserwiederholsperre für einen Zündanlassschalter (ZAS) kann auch mit einem Schliesszylinder verwendet werden.

Schließlich kann die Anlasserwiederholsperre für einen Zündanlassschalter (ZAS) mit einer mechanischen Lenkverriegelung (MLV) und einem Schliesszylinder kombiniert werden.

Das erste Eingriffselement weist eine erste Fläche und das zweite Eingriffselement eine zweite Fläche auf, die vorteilhafterweise im Wesentlichen parallel zueinander angeordnet sind. Dies ermöglicht eine einfache, schnelle und präzise Fertigung bei gleichzeitig einfacher und sicherer Montage.

Vorteilhafterweise ist die Pendelstiftaufnahme des ersten Eingriffselements im wesentlich langlochförmig und mit einer sich radial erstreckenden Längsachse ausgebildet. Dies lässt sich wiederum einfach, kostengünstig und präzise fertigen.

Aufgrund der einfachen und dennoch präzisen Fertigung wird der Pendelstift vorteilhafterweise seitlich durch die langlochförmige Pendelstiftaufnahme geführt und kann in Längsachsenrichtung eine Kipp- bzw. Pendelbewegung, insbesondere bis zu +/- 20° senkrecht zur Pendelstiftaufnahme, ausführen. Zusätzlich kann der Pendelstift bei der Montage innerhalb der Pendelstiftaufnahme aufgrund einer Passung durch einfaches Einbringen gehalten werden. Dies reduziert den Montageaufwand.

Vorteilhafterweise wird durch eine in der Pendelstiftaufnahme angeordnete Feder der Pendelstift federbelastet axial abgestützt, damit der winkelabhängige Überstand des Pendelstifts ausgeglichen wird, und sich dadurch immer in spielfreiem Eingriff mit der Steuerkulisse des zweiten Eingriffselements befindet. Dabei wird der Pendelstift in der Pendelstiftaufnahme zusammen mit der Feder gehalten und gleichzeitig durch die druckausübende Feder in Richtung des zweiten Eingriffselements gedrückt. Die Feder kann sich dabei durch eine Bohrung innerhalb der Pendelstiftaufnahme in dem ersten Eingriffselement abstützen. Aber auch andere elastische Ausformungen können anstatt einer Feder angeordnet sein. Des Weiteren kann die Feder durch den Pendelstift innerhalb der Pendelstiftaufnahme nach der Montage innerhalb der Pendelstiftaufnahme gehalten werden. Dies vereinfacht den Zusammenbau.

Zur Gewährleistung einer hohen Genauigkeit bei gleichzeitig geringem Verschleiß und geringen Erstehungskosten ist der Pendelstift vorteilhafterweise zylinderförmig mit einem balligen Ende ausgebildet. Dadurch kann beispielsweise auf geringfügig modifizierte Wälzkörper von Nadellagern zurückgegriffen werden. Alternativ können auch Druckguss- oder Stanzteile verwendet werden. Dabei können beide Enden halbkugelförmig bzw. ballig ausgeführt werden. Dadurch kann die Montage ohne eine notwendige Einbaurichtung des Pendelstift durchgeführt werden.

Vorteilhafterweise weist die Steuerkulisse des zweiten Eingriffselements eine sich annähernd kreisbogenförmig erstreckende, innere und äußere Nut auf, wobei der Radius der inneren Nut kleiner als der Radius der äußeren Nut ist, und wobei eine als nutförmige Einkerbung ausgebildete Weiche und eine als nutförmige Einkerbung ausgebildete Rückführung jeweils die innere Nut und die äußere Nut verbindet.

Diese Nuten lassen sich einfach, schnell und kostengünstig in dem zweiten Eingriffselement ausbilden und benötigen keinerlei bewegbare Bauteile. Diese Ausbildung kann sehr einfach durch Druck- oder Spritzgussbauteile erzielt werden.

Vorteilhafterweise weist in einer ersten Ausführungsform die äußere Nut eine äußere Fangtasche und in einer zweiten Ausführungsform die innere Nut eine innere Fangtasche auf, die den Pendelstift bei aktiviertem Fahrzeugmotor in der zweiten Position blockieren, wodurch eine erneute Drehung des Schließzylinders von der zweiten Position in die dritte Position verhindert wird, und die den Pendelstift beim Durchqueren der ersten Position oder ACC-Position wieder Freigeben, wodurch eine erneute Drehung des Schließzylinders von der zweiten Position in die dritte Position ermöglicht wird. Dadurch wird ein bereits gestarteter Motor wirksam vor einem weiteren Anlassereingriff geschützt.

Vorteilhafterweise weisen das erste Eingriffselement und das zweite Eingriffselement eine gemeinsame Rotationsachse auf. Aufgrund dieser gemeinsamen Rotationsachse kann wiederum eine einfache Fertigung und ein einfacher Zusammenbau erfolgen.

Vorteilhafterweise kann das erste Eingriffselement durch den Pendelstift und das zweite Eingriffselement durch weitere Vertiefungen innerhalb der Steuerkulisse eine Indexierung ausbilden. Dies vereinfacht eine Montage und eine Überprüfung der Stellungen der Eingriffselemente zueinander bzw. der Funktionen der Anlasserwiederholsperre.

### Kurze Beschreibung der Zeichnungen

Nachfolgend wird die Erfindung anhand mehrerer Ausführungsbeispiele zusammen mit den beigefügten Zeichnungen erläutert. Dazu zeigt:
Figur 1 eine perspektivische Darstellung eines ersten Eingriffselements einer Anlasserwiederhölsperre gemäß einer ersten und zweiten Ausführungsform der vorliegenden Erfindung;
Figur 2 eine perspektivische Darstellung des ersten Eingriffselements der Anlasserwiederholsperre gemäß einer ersten und zweiten Ausführungsform der vorliegenden Erfindung mit Pendelstift;
Figur 3 eine perspektivische Darstellung eines zweiten Eingriffselements der Anlasserwiederholsperre gemäß einer ersten Ausführungsform der vorliegenden Erfindung;
Figur 4 eine perspektivische Darstellung eines zweiten Eingriffselements der Anlasserwiederholsperre gemäß einer zweiten Ausführungsform der vorliegenden Erfindung;
Figur 5 eine perspektivische Darstellung der Anlasserwiederholsperre gemäß einer ersten und zweiten Ausführungsform der vorliegenden Erfindung;
Figur 6 eine perspektivische Darstellung der Anlasserwiederholsperre gemäß einer dritten Ausführungsform der vorliegenden Erfindung;
Figur 7 eine perspektivische Darstellung der Anlasserwiederholsperre gemäß einer vierten Ausführungsform der vorliegenden Erfindung;
Figur 8 eine perspektivische Darstellung der Anlasserwiederholsperre gemäß einer ersten Ausführungsform der vorliegenden Erfindung mit dem ersten und zweiten Eingriffselement;
Figur 9 eine weitere perspektivische Darstellung des zweiten Eingriffselements der Anlasserwiederholsperre gemäß einer ersten Ausführungsform der vorliegenden Erfindung;
Figuren 10a, 10b, 10c Schnittdarstellungen und perspektivische Darstellungen der Anlasserwiederholsperre gemäß einer ersten Ausführungsform der vorliegenden Erfindung;
Figur 11 eine perspektivische Darstellung des ersten Eingriffselements einer Anlasserwiederholsperre gemäß einer fünften Ausführungsform der vorliegenden Erfindung;
Figur 12 eine perspektivische Darstellung des ersten Eingriffselements der Anlasserwiederholsperre gemäß einer fünften Ausführungsform der vorliegenden Erfindung mit Pendelstift und Indexierstift;
Figur 13a eine schematische Darstellung der Anlasserwiederholsperre für einen Zündanlassschalter (ZAS) in Komination mit einer mechanischen Lenkverriegelung (MLV) und einem Schliesszylinder;
Figur 13b eine schematische Darstellung der Anlasserwiederholsperre für einen Zündanlassschalter (ZAS) in Kombination mit einem Schliesszylinder;
Figur 13c eine schematische Darstellung der Anlasserwiederholsperre für einen Zündanlassschalter (ZAS) in Kombination mit einer mechanischen Lenkverriegelung (MLV) und
Figur 13d eine schematische Darstellung der Anlasserwiederholsperre für einen Zündanlassschalter (ZAS).

Nachfolgend beziehen sich Richtungsangaben auf die Zeichnungsebene bzw. auf die Rotationsachse R der Anlasserwiederholsperre.

### Detaillierte Beschreibung bevorzugter Ausführungsformen

### Erste Ausführungsform

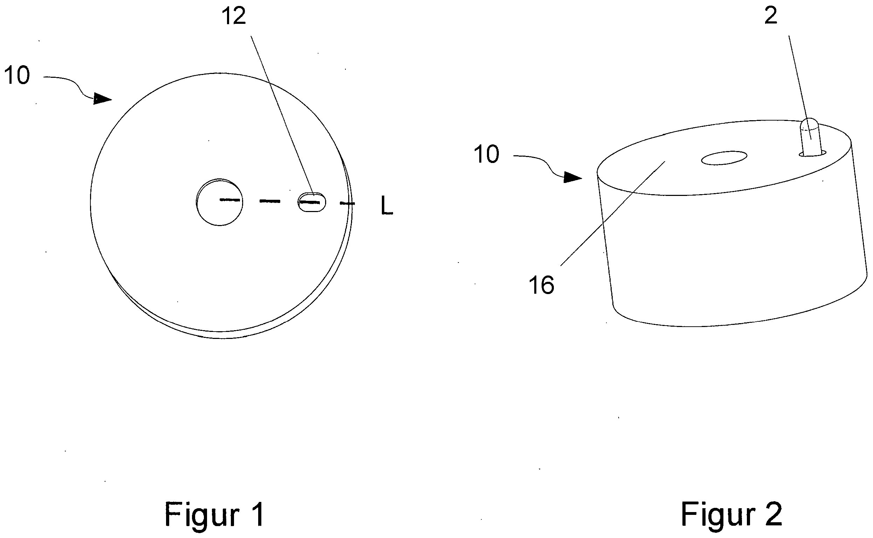

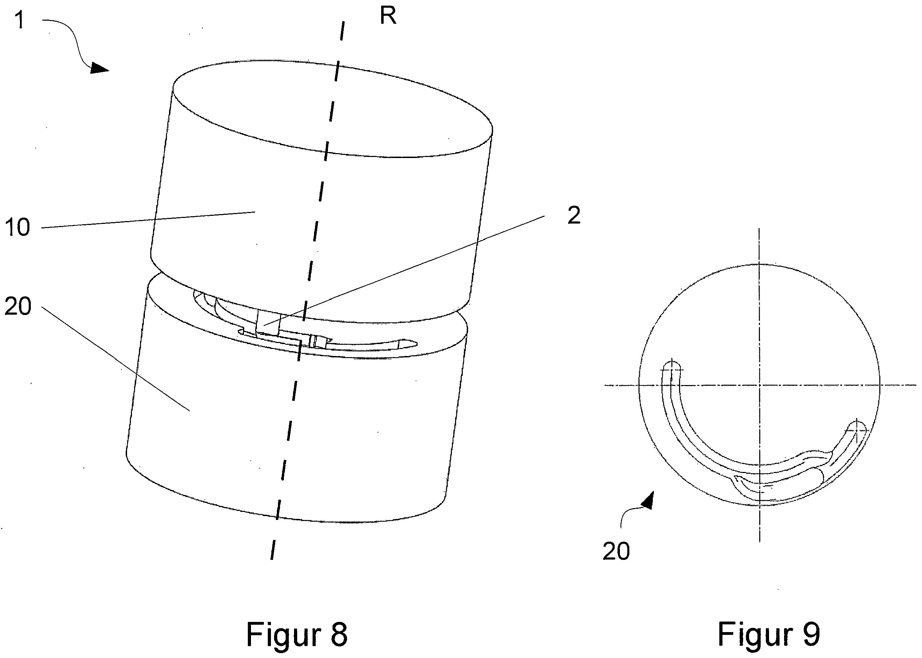

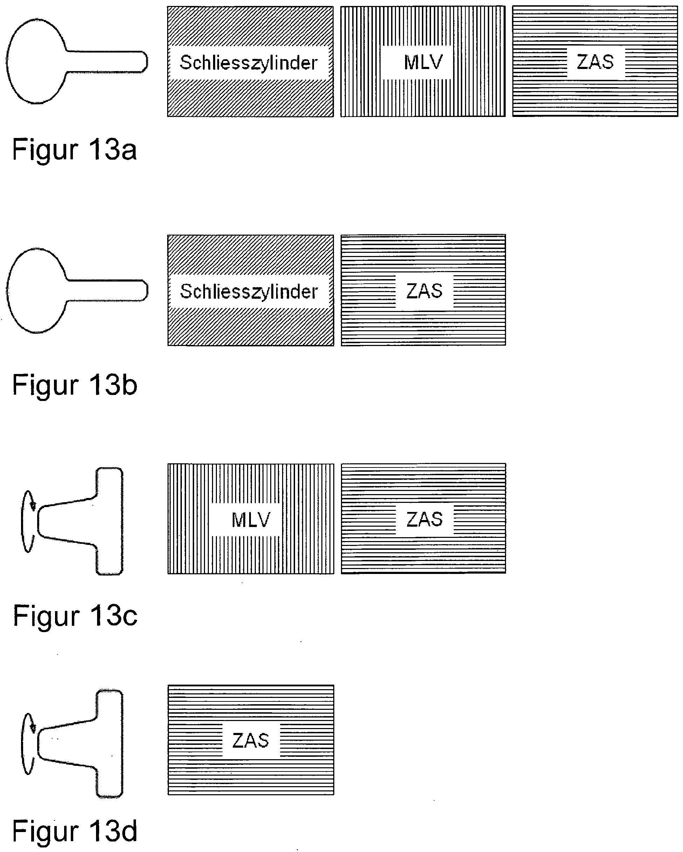

Die Figuren 1, 2, 3, 5, 8 9, 10a, 10b und 10c zeigen eine erste Ausführungsform einer mechanischen Lenkverriegelung mit einem Schließzylinder, der eine Anlasserwiederholsperre aufweist. Aus Figur 13a ist dazu eine schematische Darstellung entnehmbar.

Die Anlasserwiederholsperre 1 weist ein Eingriffselementepaar mit einem ersten Eingriffselement 10 und einem zweiten Eingriffselement 20 auf, wobei das erste Eingriffselement 10 oder das zweite Eingriffselement 20 mit dem Schließzylinder mechanisch gekoppelt und drehfest verbunden ist. Die beiden Eingriffselemente 10, 20 sind dabei um eine gemeinsame Rotationsachse R gegeneinander verdrehbar angeordnet.

Das erste Eingriffselement 10 ist scheiben- bzw. zylinderförmig um die Rotationsachse R ausgebildet und weist zwei ebene Flächen und eine Zentrierbohrung auf, wobei eine dieser Flächen als erste Fläche 16 bezeichnet wird. Auf dieser ersten Fläche 16 ist eine langlochförmige Pendelstiftaufnahme 12 ausgeführt, deren Längsachse L sich im Wesentlichen radial durch die Zentrierbohrung erstreckt. Die Pendelstiftaufnahme 12 weist zwei im Wesentlichen zueinander parallel verlaufende Seitenflächen auf, die jeweils an ihren Enden mit jeweils einer halbkegelförmigen Fläche verbunden sind. Dabei entspricht der Abstand der beiden Seitenflächen und der Durchmesser der halbkegelförmigen Fläche im Wesentlichen dem Durchmesser eines Pendelstifts 2. Zur Aufnahme einer Feder 4 ist zentrisch innerhalb der Pendelstiftaufnahme 12 eine sich parallel zu der Rotationsachse R erstreckende Bohrung ausgeführt.

Der Pendelstift 2 ist zylinderförmig ausgebildet, weist halbkugelförmige, ballige Kopfenden auf und wird insbesondere aus einem gehärteten Stahl ausgeführt. Somit kann beispielsweise auf geringfügig modifizierte Wälzkörper von Nadellager zurückgegriffen werden. Dadurch kann ein sehr präzise gefertigter Pendelstift, mit hoher Härte und damit verschleißarm, zu günstigen Kosten bezogen werden.

Der Pendelstift 2 wird von der Pendelstiftaufnahme 12 kulissenartig geführt, wobei der Abstand der Seitenflächen und der Durchmesser des Pendelstifts 2 eine Passung bilden. Aufgrund dieser Passung und der langlochförmigen Ausbildung der Pendelstiftaufnahme 12 wird eine seitlich nahezu spielfreie Führung des Pendelstifts 12 in der Längsachsenrichtung L zur Verfügung gestellt. Gleichzeitig kann der Pendelstift 2 in Längsachsenrichtung L aufgrund einer definierten Tiefe der Pendelstiftaufnahme 12 kippen. Der Kippwinkel wird in dieser Ausführungsform im Wesentlichen auf +/- 20° durch die Pendelstiftaufnahme 12 begrenzt.

Vor der Montage des Pendelstifts 2 wird die Feder 4 in der sich parallel zu der Rotationsachse R erstreckenden Bohrung aufgenommen.

Das zweite Eingriffselement 20 ist ebenfalls scheiben- bzw. zylinderförmig um eine Rotationsachse R ausgebildet und weist zwei ebene Flächen auf. Dabei ist auf einer, nach einer Montage der ersten Seite 16 zugewandten, zweiten Fläche 26 eine Steuerkulisse 21, 22, 23, 24, 25 zur Steuerung des Pendelstifts 2 als integraler Teil des zweiten Eingriffselements 20 ausgebildet. Die Steuerkulisse 21, 22, 23, 24, 25 weist mehrere nutförmige Einkerbungen und rillenartige Nuten auf dieser Seite auf. Hierbei ist eine erste innere Nut 21 annähernd kreisbogenförmig, eben ausgeführt und erstreckt sich über ein Bogensegment von ca. 120° in radialer Richtung.

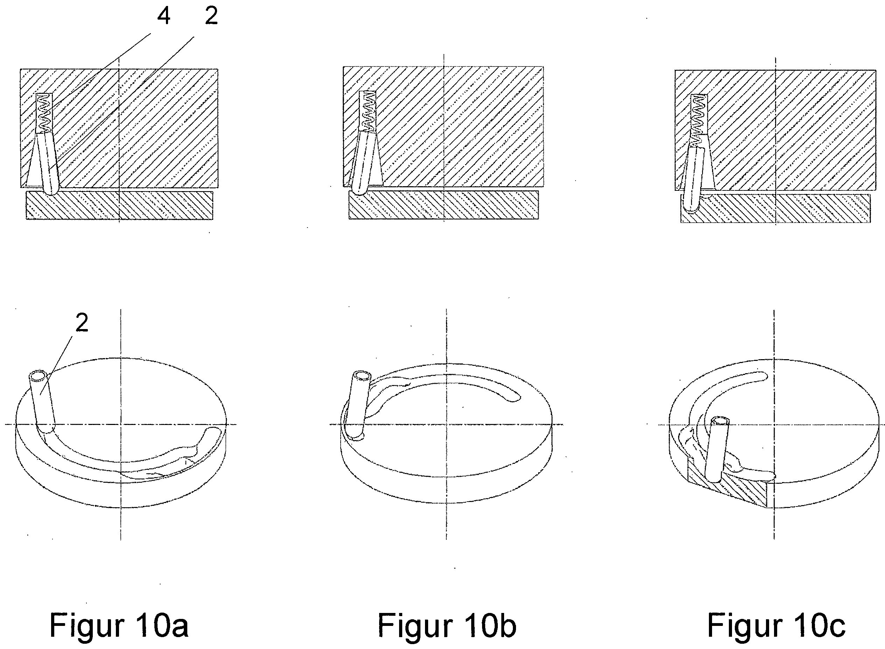

Dabei entspricht einem Anfangspunkt eine erste Position I (bzw. 0° Position), wie auch Figur 10a entnehmbar, und einem Endpunkt eine zweite Position II (bzw. ∼ 120° Position), wie auch Figur 10c entnehmbar. Zwischen der ersten Position I und der zweiten Position II der inneren Nut 21 befindet sich häufig noch eine ACC-Position ACC, die als "ACC-Stellung" des Schließzylinders bezeichnet wird, und bei der diverse Verbraucher am Kraftfahrzeug wie beispielsweise ein Radio aktivierbar sind.

Eine zweite äußere Nut 22 ist ebenfalls annähernd kreisbogenförmig ausgeführt und erstreckt sich über ein Bogensegment von ca. 95° in radialer Richtung. Die Breite der inneren 21 und äußeren Nut 22 ist im Wesentlichen gleich und für eine optimale Führung des Pendelstifts 2 ausgebildet. Der Radius der inneren Nut 21 ist dabei geringer als der Radius der äußeren Nut 22, wobei der Radius der inneren Nut 21 auch geringer als der Radius der äußeren Nut 22 abzüglich der Nutbreite ist. Der Anfangspunkt der äußeren Nut 22 liegt winkelig zwischen dem Anfangspunkt und dem Endpunkt der inneren Nut 21, bzw. zwischen der ersten Position I und der zweiten Position II, und entspricht im Wesentlichen winkelig der ACC-Position ACC, die um ca. 60° gegenüber der ersten Position I winkelverdreht ist.

Somit entspricht der Drehwinkel der ACC-Position ACC der inneren Nut 21 im Wesentlichen dem Drehwinkel des Anfangspunktes der äußeren Nut 22, also der "ACC-Stellung" und der Drehwinkel des Endpunkts der äußeren Nut 22 der dritten Position III, (bzw. ∼ 155° Position), wie auch Figur 10b entnehmbar, die auch als "Start-Stellung" bezeichnet wird.

Ausgehend von der Position II wird nach einer weiteren Drehbewegung des Schließzylinders die dritte Position III erreicht, die der "Start-Stellung" des Schließzylinders entspricht und bei der die Aktivierung des Motors erfolgt. Die rillenartigen, nutförmigen Einkerbungen beim Anfangspunkt der äußeren Nut 22 und beim Endpunkt der inneren Nut 21 sind als Rückführung 24 und als eine Weiche 23 ausgebildet, und verbinden jeweils die innere und äußere Nut 21, 22.

Des Weiteren ist in der äußeren Nut 22 im Wesentlichen bei der zweiten Position II eine äußere Fangtasche 25 als kerbförmige Vertiefung so ausgebildet, dass sie der Pendelstift 2 nur in Richtung erste Position I verlassen kann. Das zweite Eingriffselement 20 ist als einstückiges Bauteil ausgeführt, welches im Spritzgussverfahren aus einem glasfaserverstärkten Kunststoff, hier PBT (Polybutylenterephthalat), hergestellt ist.

Nach der Montage bzw. dem Zusammenbau des ersten Eingriffselements 10, Feder 4 und Pendelstift 2, mit dem zweiten Eingriffselement 20, ist der Pendelstift 2 in formschlüssigem Eingriff mit der beschriebenen Kulisse. Befindet sich der Schließzylinder in der Anfangsposition dann ist der Pendelstift 2 im Eingriff mit der inneren Nut 21 an der Position I. Wird der Schließzylinder in Richtung "Start-Stellung" gedreht, dann durchquert der Pendelstift 2 zuerst auf der inneren Nut 21 die ACC-Position ACC, erreicht die zweite Position II, entsprechend der "ZündStellung", worauf er die Weiche 23 im Wesentlichen radial durchquert und in die äußere Nut 22 gelenkt wird. Dann erreicht der nun in der äußeren Nut 22 geführte Pendelstift 2 die dritte Position III, entsprechend der "Start-Stellung". Wird der Schließzylinder jetzt wieder Richtung zweite Position II, entsprechend der Stellung bei "laufendem Motor", zurückgedreht, dann wird der Pendelstift 2 in der äußeren Nut 22 in der äußeren Fangtasche 25 aufgenommen. Diese äußere Fangtasche 25 ist in der äußeren Nut 22 so keilförmig ausgebildet, dass der Pendelstift 2 die äußere Fangtasche 25 nur in Richtung erste Position I, entsprechend "Stellung Motor aus", verlassen kann, und als einseitig wirkendes, federndes Rastelement dient. Ein Zurückdrehen in die dritte Position III wird dadurch blockiert. Beim Weiterdrehen in Richtung erste Position I kann der federnd abgestützte Pendelstift 2 die äußere Fangtasche 25 verlassen und wird im Wesentlichen beim Erreichen der ACC-Position ACC auf die innere Nut 21 im Wesentlichen radial geführt. Dabei wechselt der Pendelstift 2 pendelnd von der äußeren Nut durch die Rückführung 24 auf die innere Nut 21. Entsprechend der "ACC-Stellung" wird der Motor an dieser ACC-Position ACC deaktiviert, bzw. die Zündung unterbrochen. Durch erneute Drehung des Schließzylinders in die dritte Position III kann der Motor jetzt wieder aktiviert werden.

### Zweite Ausführungsform

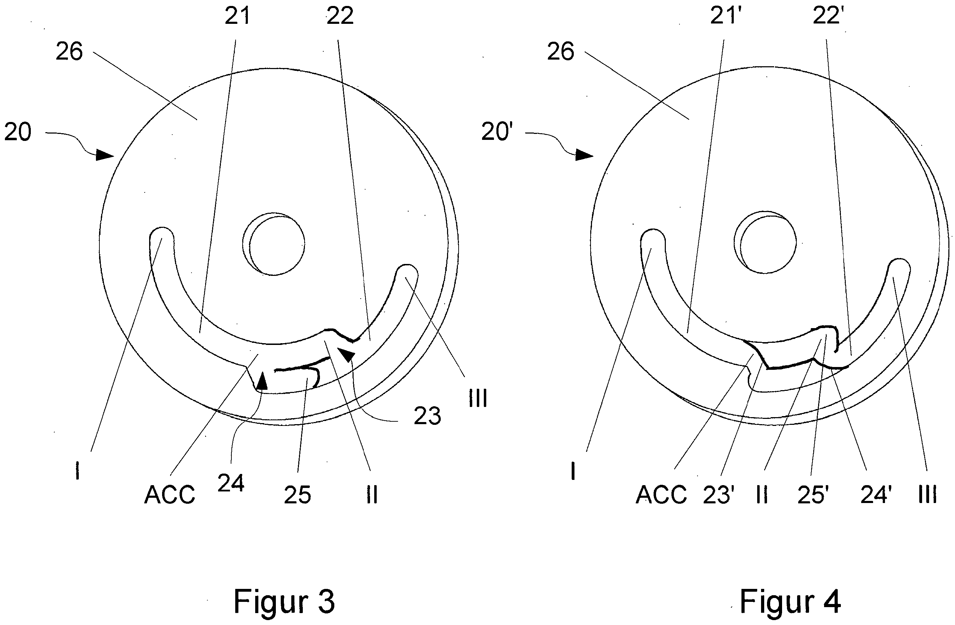

Die Figur 4 zeigt perspektivisch eine zweite Ausführungsform. Die zweite Ausführungsform unterscheidet sich von der ersten Ausführungsform im Wesentlichen nur dadurch, dass die als kerbförmige Vertiefung ausgebildete äußere Fangtasche 25 in der äußeren Nut 22 als innere Fangtasche 25' am Ende einer inneren Nut 21' ausgeführt wurde. Diese innere Fangtasche 25' ist in der inneren Nut 21' so ausgebildet, dass der Pendelstift 2 die innere Fangtasche 25' nur in Richtung erste Position I verlassen kann und als Rastelement dient. Ein Zurückdrehen in die dritte Position III wird dadurch blockiert.

In der in Figur 4 gezeigten zweiten Ausführungsform durchquert der Pendelstift 2 bei einer Drehung des Schließzylinders von der ersten Position I in Richtung dritte Position III zuerst auf der inneren Nut 21' die ACC-Position ACC, um dann durch die Weiche 23 auf die äußere Nut 22' gelenkt zu werden und über die zweite Position II die dritte Position III zu erreichen.

Wird der Schließzylinder jetzt wieder Richtung zweite Position II zurückgedreht, dann wird der Pendelstift 2 bei der zweiten Position II über die Rückführung 24' von der äußeren Nut 22' in die innere Nut 21' im Wesentlichen radial geführt. Eine nochmalige Winkelbewegung von der zweiten Position II zur dritten Position III ist zu diesem Zeitpunkt aufgrund der Ausgestaltung der inneren Fangtasche 25' und dem rastenden Eingriff des Pendelstifts 2 nicht möglich.

Beim Weiterdrehen in Richtung ACC-Position und/oder erste Position I kann der Pendelstift 2 die innere Fangtasche 25' verlassen und wird im Wesentlichen im Bereich der ACC-Position ACC durch erneutes Drehen von der ACC-Position ACC zu der zweiten Position II pendelnd von der inneren Nut 21' durch die Weiche 23' auf die äußere Nut 22' geführt. Durch eine weitere Drehung des Schließzylinders in die dritte Position III kann der Motor jetzt wieder aktiviert werden.

### Dritte Ausführungsform

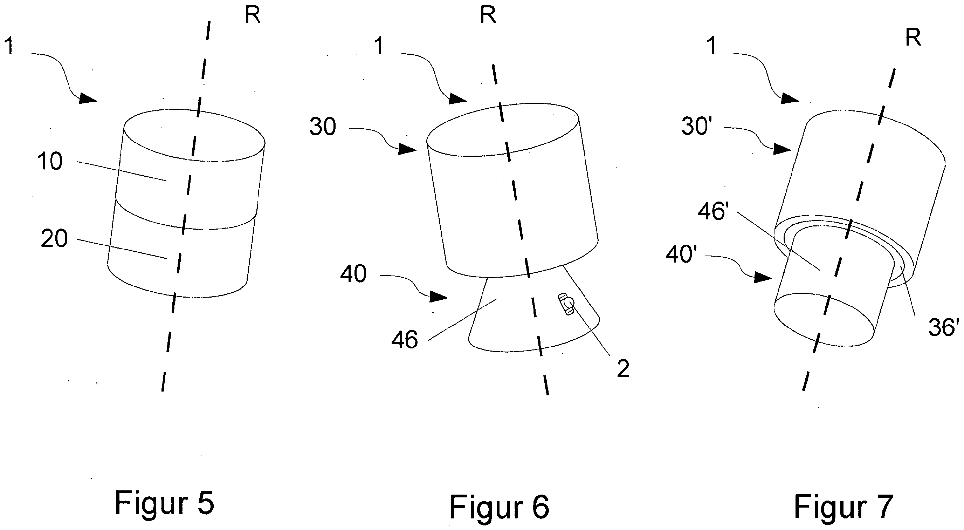

Die Figur 6 zeigt schematisch eine dritte Ausführungsform. Die dritte Ausführungsform unterscheidet sich von der ersten und zweiten Ausführungsform im Wesentlichen nur dadurch, dass die beiden zueinander gewandten Seiten, erste und zweite Fläche 36, 36, der Eingriffselemente 30, 40 nicht mehr planparallel, sondern konisch parallel ausgeführt sind. Sowohl die Pendelstiftaufnahme 12 als auch die Steuerkulisse 21, 22, 23, 24, 25; 21', 22', 23', 24', 25' wurden auf kegelförmige Seiten projiziert. Das erste Eingriffselement 30 weist dabei die kegelförmige, als Innenfläche ausgeführte, erste Fläche 36 und das zweite Eingriffselement 40 die kegelförmige, als Außenfläche ausgeführte, zweite Fläche 46 auf. Dabei kann sowohl die Steuerkulisse 21, 22, 23, 24, 25; 21', 22', 23', 24', 25' der ersten als auch zweiten Ausführungsform verwendet werden. Des Weiteren kann die Steuerkulisse 21, 22, 23, 24, 25; 21', 22', 23', 24', 25' auf dem ersten Eingriffselement 30 und die Pendelstiftaufnahme 12 auf dem zweiten Eingriffselement 40, oder die Steuerkulisse 21, 22, 23, 24, 25; 21', 22', 23', 24', 25' auf dem zweiten Eingriffselement 40 und die Pendelstiftaufnahme 12 auf dem ersten Eingriffselement 30 ausgebildet sein. Aufgrund der konischen Verbindung wird das zweite Eingriffselement 40 zentrisch innerhalb des ersten Eingriffselements 30 geführt.

### Vierte Ausführungsform

Die Figur 7 zeigt schematisch eine vierte Ausführungsform. Die vierte Ausführungsform unterscheidet sich von der dritten Ausführungsform im Wesentlichen nur dadurch, dass die beiden zueinander gewandten Seiten, eine erste Fläche 36' und eine zweite Fläche 46', der Eingriffselemente 30', 40' nicht mehr konisch parallel, sondern zylindrisch parallel mit einer Innenzylinderfläche des ersten Eingriffselements 30', als eine erste Fläche 36', und einer Außenzylinderfläche des zweiten Eingriffselements 40', als eine zweite Fläche 46', ausgeführt sind.

### Fünfte Ausführungsform

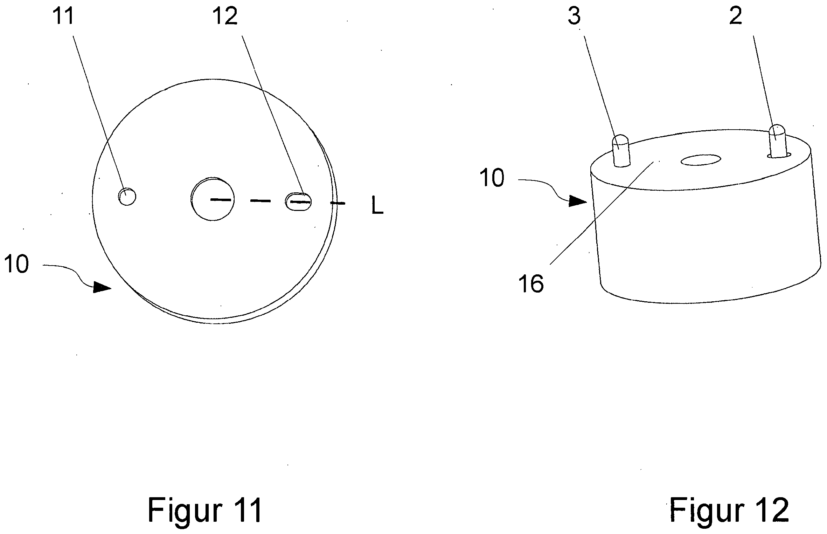

Figuren 11 und 12 zeigen perspektivisch eine fünfte Ausführungsform. Bei der fünften Ausführungsform weist das erste Eingriffselement 10 eine zusätzliche Indexierbohrung 11 mit einer Feder und einem Indexierstift 3 auf, wobei durch die in der Indexierbohrung 11 angeordnete Feder der Indexierstift 3 federbelastet axial abgestützt ist, damit der Überstand des Indexierstift 3 ausgeglichen wird, und sich dadurch immer in spielfreiem Kontakt mit einer Oberfläche des zweiten Eingriffselements befindet. Dabei kann der Indexierstift 3 in der Indexierbohrung 11 zusammen mit der Feder gehalten und gleichzeitig durch die druckausübende Feder in Richtung des zweiten Eingriffselements 20 gedrückt werden. Die Feder kann sich dabei durch die Indexierbohrung 11 in dem ersten Eingriffselement 10 abstützen. Aber auch andere elastische Ausformungen können anstatt einer Feder angeordnet sein. Des Weiteren kann die Feder durch den Indexierstift 3 innerhalb der Indexierbohrung 11 nach der Montage gehalten werden. Dies vereinfacht den Zusammenbau.

Die hier beschriebenen vorteilhaften Ausführungsformen dienen lediglich der Erläuterung und stellen keine Einschränkung des Schutzumfangs dar.

In einer nicht gezeigten abgewandelten Ausführungsform sind auch mehrere Indexierbohrungen 11 für Federn und Indexierstifte 3 denkbar. Auch weitere Kombinationen verschiedener Lagerarten sind in weiteren Ausführungsformen denkbar.

In weiteren Ausführungsformen sind anstatt einer Feder 4 auch andere elastische Bauteile wie gummiartige Köper etc. denkbar. Auch eine integrale Ausführung der Feder 4 mit einem Eingriffselement 10, 30, 30' ist denkbar.

In weiteren Ausführungsformen sind für ein Eingriffselement 10, 30, 30'; 20, 20', 40, 40' auch andere Herstellungsverfahren wie Spritzguss, Sinterverfahren, als auch andere Werkstoffe wie Verbundwerkstoffe, Kunststoffe, metallische Verbindungen etc. denkbar.

In einer weiteren Ausführungsform ist für die Herstellung eines Eingriffselements 10, 30, 30'; 20, 20', 40, 40' ein Druckgussverfahren mit einer Zamak-Legierung, z.B. ZnAl4Cu1 denkbar.

Des Weiteren ist in einer Ausführungsform eine Anlasserwiederholsperre für einen Zündanlassschalter auch in Kombination mit einer Lenkverriegelung für ein Fahrzeug denkbar, wie in Figur 13c dargestellt.

Auch eine Kombination der Anlasserwiederholsperre für einen Zündanlassschalter mit einem Schließzylinder ist vorstellbar und aus Figur 13b entnehmbar.

Schließlich ist auch eine Kombination der Anlasserwiederholsperre für einen Zündanlassschalter mit einem Schließzylinder und einer Lenkverriegelung für ein Fahrzeug denkbar, wie in Figur 13c dargestellt.

### Bezugszeichenliste

- 1: Anlasserwiederholsperre
- 2: Pendelstift
- 3: Indexierstift
- 4: Feder
- 10, 30, 30': erstes Eingriffselement
- 11: Indexierbohrung
- 12: Pendelstiftaufnahme
- 16, 36, 36': erste Fläche
- 20, 20', 40, 40': zweites Eingriffselement
- 21, 21': innere Nut
- 22, 22': äußere Nut
- 23, 23': Weiche
- 24, 24': Rückführung
- 25: äußere Fangtasche
- 25': innere Fangtasche
- 26, 46, 46': zweite Fläche
- I: erste Position
- II: zweite Position
- III: dritte Position
- ACC: ACC-Position
- R: Rotationsachse
- L: Längsachse

## Patentansprüche

1. Anlasserwiederholsperre (1) für einen Zündanlassschalter, welche folgendes aufweist:
ein erstes Eingriffselement (10; 30; 30'), welches eine Pendelstiftaufnahme (12) für einen Pendelstift (2) aufweist, wobei der Pendelstift (2) teilweise aus der Pendelstiftaufnahme (12) hervorsteht und pendelnd bewegbar ist, und
ein zweites Eingriffselement (20; 20'; 40; 40'), wobei das zweite Eingriffselement (20; 20'; 40; 40') eine Steuerkulisse (21, 22, 23, 24; 21', 22', 23', 24') aufweist, wobei das erste Eingriffselement (10; 30; 30') und das zweite Eingriffselement (20; 20'; 40; 40') koaxial zueinander angeordnet sind, wobei zumindest das erste Eingriffselement (10; 30; 30') oder das zweite Eingriffselement (20; 20'; 40; 40') um die gemeinsame Achse (R) drehbar ist und wobei, wenn sich der Pendelstift (2) entgegen einer Bewegungsrichtung des ersten bzw. zweiten Eingriffselements in Umfangsrichtung abstützt und sich in Eingriff mit der Steuerkulisse (21, 22, 23, 24; 21', 22', 23', 24') befindet, eine Drehbewegung des ersten Eingriffselements (10; 30; 30') gegenüber dem zweiten Eingriffselement (20; 20'; 40; 40') bei laufendem Motor in eine Startstellung bzw. dritte Position (III) verhindert wird.

2. Anlasserwiederholsperre (1) nach Anspruch 1, wobei das erste Eingriffselement (10; 30; 30') eine erste Fläche (16) und das zweite Eingriffselement (20; 20'; 40; 40') eine zweite Fläche (26) aufweist, die im Wesentlichen parallel zueinander angeordnet sind.

3. Anlasserwiederholsperre (1) nach einem der vorhergehenden Ansprüche, wobei die Pendelstiftaufnahme (12) des ersten Eingriffselements (10; 30; 30') im wesentlich langlochförmig ausgebildet ist und deren Längsachse radial verläuft.

4. Anlasserwiederholsperre (1) nach einem der vorhergehenden Ansprüche, wobei die langlochförmige Pendelstiftaufnahme (12) den Pendelstift (2) seitlich führt und in Längsachsenrichtung eine Kipp- bzw. Pendelbewegung ermöglicht, insbesondere bis zu +/- 20° senkrecht zur Pendelstiftaufnahme (12).

5. Anlasserwiederholsperre (1) nach einem der vorhergehenden Ansprüche, wobei eine in der Pendelstiftaufnahme (12) angeordnete Feder (4) den Pendelstift (2) federbelastet axial abstützt.

6. Anlasserwiederholsperre (1) nach einem der vorhergehenden Ansprüche, wobei der Pendelstift (2) zylinderförmig ausgebildet ist und ein balliges Ende aufweist.

7. Anlasserwiederholsperre (1) nach einem der vorhergehenden Ansprüche, wobei die Steuerkulisse (21, 22, 23, 24; 21', 22', 23', 24') des zweiten Eingriffselements (20; 20'; 40; 40') eine sich annähernd kreisbogenförmig erstreckende innere Nut (21; 21') und äußere Nut (22; 22') aufweist, wobei der Radius der inneren Nut (21; 21') kleiner als der Radius der äußeren Nut (22; 22') ist, und wobei eine als nutförmige Einkerbung ausgebildete Weiche (23; 23') und eine als nutförmige Einkerbung ausgebildete Rückführung (24; 24') jeweils die innere Nut (21; 21') und die äußere Nut (22; 22') verbindet.

8. Anlasserwiederholsperre (1) nach Anspruch 7, wobei die äußere Nut (22) eine äußere Fangtasche (25) oder die innere Nut (23') eine innere Fangtasche (25') aufweist, die den Pendelstift (2) bei aktiviertem Fahrzeugmotor in der zweiten Position (II) blockiert, wodurch eine erneute Drehung des Schließzylinders von der zweiten Position (II) in die dritte Position (III) verhindert wird, und die den Pendelstift (2) beim Durchqueren der ACC- Position (ACC) wieder freigibt, wodurch eine erneute Drehung des Schließzylinders von der zweiten Position (II) in die dritte Position (III) ermöglicht wird.

9. Anlasserwiederholsperre (1) nach einem der vorhergehenden Ansprüche, wobei das erste Eingriffselement (10; 30; 30') und das zweite Eingriffselement (20; 20'; 40; 40') eine gemeinsame Rotationsachse (R) aufweisen.

10. Anlasserwiederholsperre (1) nach einem der vorhergehenden Ansprüche, wobei das erste Eingriffselement (10; 30; 30') durch den Pendelstift (2) und das zweite Eingriffselement (20; 20'; 40; 40') durch weitere Vertiefungen innerhalb der Steuerkulisse (21, 22, 23, 24; 21', 22', 23', 24') eine Indexierung ausbilden.

## Claims

1. Starter antirepeat device (1) for an ignition starting switch, which comprises the following:
a first engagement element (10; 30; 30') which has an oscillating pin receptacle (12) for an oscillating pin (2), wherein the oscillating pin (2) projects partially out of the oscillating pin receptacle (12) and is movable in an oscillating manner, and
a second engagement element (20; 20'; 40; 40'), wherein the second engagement element (20; 20';.40; 40') has a control slot (21, 22, 23, 24; 21', 22', 23', 24'), wherein the first engagement element (10; 30; 30') and the second engagement element (20; 20'; 40; 40') are arranged coaxially with respect to one another, wherein at least the first engagement element (10; 30; 30') or the second engagement element (20; 20'; 40; 40') is rotatable about the common axis (R), and wherein, when the oscillating pin (2) is supported in the circumferential direction counter to a direction of movement of the first or second engagement element and is in engagement with the control slot (21, 22, 23, 24; 21', 22', 23', 24'), a rotational movement of the first engagement element (10; 30; 30') relative to the second engagement element (20; 20'; 40; 40') into a starting position or a third position (III) while the engine is running is prevented.

2. Starter antirepeat device (1) according to claim 1, wherein the first engagement element (10; 30; 30') has a first surface (16) and the second engagement element (20; 20'; 40; 40') has a second surface (26), which surfaces are arranged substantially parallel to one another.

3. Starter antirepeat device (1) according to one of the preceding claims, wherein the oscillating pin receptacle (12) of the first engagement element (10; 30; 30') is formed substantially as an elongate hole and the longitudinal axis thereof extends radially.

4. Starter antirepeat device (1) according to one of the preceding claims, wherein the oscillating pin receptacle (12) in the form of an elongate hole guides the oscillating pin (2) laterally and enables a tilting or oscillating movement in the longitudinal axial direction, in particular up to ± 20° perpendicular to the oscillating pin receptacle (12).

5. Starter anti repeat device (1) according to one of the preceding claims, wherein a spring (4) arranged in the oscillating pin receptacle (12) supports the oscillating pin (2) axially by spring loading.

6. Starter antirepeat device (1) according to one of the preceding claims, wherein the oscillating pin (2) is cylindrical and has a spherical end.

7. Starter antirepeat device (1) according to one of the preceding claims, wherein the control slot (21, 22, 23, 24; 21', 22', 23', 24') of the second engagement element (20; 20'; 40; 40') has an inner channel (21; 21') and an outer channel (22; 22'), wherein the radius of the inner channel (21; 21') is less than the radius of the outer channel (22; 22'), and wherein a diversion (23; 23') in the form of a channel-shaped indentation and a return (24; 24') in the form of a channel-shaped indentation in each case connects the inner channel (21; 21') and the outer channel (22; 22').

8. Starter antirepeat device (1) according to claim 7, wherein the outer channel (22) has an outer catching pocket (25) or the inner channel (23') has an inner catching pocket (25'), which immobilises the oscillating pin (2) in the second position (II) with the vehicle engine activated, so that a repeated rotation of the lock cylinder from the second position (II) into the third position (III) is prevented, and the oscillating pin (2) is released again when it passes through the ACC position (ACC), so that a further rotation of the lock cylinder from the second position (II) into the third position (III) is enabled.

9. Starter antirepeat device (1) according to claim 1, wherein the first engagement element (10; 30; 30') and the second engagement element (20; 20'; 40; 40') have a common axis of rotation (R).

10. Starter antirepeat device (1) according to one of the preceding claims, wherein the first engagement element (10; 30; 30') forms an indexing means by the oscillating pin (2) and the second engagement element (20; 20'; 40; 40') forms an indexing means by further recesses inside the control slot (21, 22, 23, 24; 21', 22', 23', 24').

## Revendications

1. Un dispositif de protection contre les démarrages répétés (1) pour un commutateur d'allumage, comprenant:
un premier élément d'engagement (10; 30; 30') présentant un réceptacle de goupille oscillante (12) pour une goupille oscillante (2), dans lequel la goupille oscillante (2) fait saillie partiellement à partir du réceptacle de goupille oscillante (12) et est mobile de manière oscillante, et
un second élément d'engagement (20; 20' ; 40; 40'), le second élément d'engagement (20; 20'; 40; 40') présentant une coulisse de commande (21, 22, 23, 24; 21', 22', 23', 24'), dans lequel le premier élément d'engagement (10; 30; 30') et le second élément d'engagement (20; 20'; 40; 40') sont disposés coaxialement l'un par rapport à l'autre, dans lequel au moins le premier élément d'engagement (10; 30; 30') ou le second élément d'engagement (20; 20'; 40; 40') est pivotable autour de l'axe commun (R) et dans lequel une rotation du premier élément d'engagement (10; 30; 30') par rapport au second élément d'engagement (20; 20'; 40; 40') vers une position d'allumage, respectivement vers une troisième position (III), est empêchée si le moteur tourne, lorsque la goupille oscillante (2) bute contre une direction circonférentielle de déplacement du premier ou du second élément d'engagement, respectivement, et est engagée dans la coulisse de commande (21, 22, 23, 24; 21' 22', 23', 24').

2. Le dispositif de protection contre les démarrages répétés (1) selon la première revendication, dans lequel le premier élément d'engagement (10; 30; 30') présente une première surface (16) et le second élément d'engagement (20; 20'; 40; 40') une seconde surface (26) qui sont disposées de façon sensiblement parallèle l'une à l'autre.

3. Le dispositif de protection contre les démarrages répétés (1) selon l'une quelconque des revendications précédentes, dans lequel le réceptacle de goupille oscillante (12) du premier élément d'engagement (10; 30; 30') est formé essentiellement en forme de fente et dont l'axe longitudinal s'étend radialement.

4. Le dispositif de protection contre les démarrages répétés (1) selon l'une quelconque des revendications précédentes, dans lequel le réceptacle de goupille oscillante (12) formé essentiellement en forme de fente guide la goupille oscillante (2) latéralement et permet un mouvement oscillant ou bien un basculement, respectivement, en direction d'un axe longitudinal, en particulier jusqu'à +/- 20° perpendiculairement au réceptacle de goupille oscillante (12).

5. Le dispositif de protection contre les démarrages répétés (1) selon l'une quelconque des revendications précédentes, dans lequel un ressort (4) agencé dans le réceptacle de goupille oscillante (12) contrebute axialement la goupille oscillante (2) montée à ressort.

6. Le dispositif de protection contre les démarrages répétés (1) selon l'une quelconque des revendications précédentes, dans lequel la goupille oscillante (2) est formée de façon cylindrique et présente une extrémité bombée.

7. Le dispositif de protection contre les démarrages répétés (1) selon l'une quelconque des revendications précédentes, dans lequel la coulisse de commande (21, 22, 23, 24; 21', 22', 23', 24') du second élément d'engagement (20; 20'; 40; 40') présente une rainure intérieure (21; 21') s'étendant sensiblement en arc de cercle et une rainure extérieure (22; 22'), dans lequel le rayon de la rainure intérieure (21; 21') est inférieur au rayon de la rainure extérieure (22; 22'), et dans lequel un aiguillage aller (23; 23') en forme d'encoche et un aiguillage retour (24; 24') en forme d'encoche raccordent, chacun, la rainure intérieure (21; 21') et la rainure extérieure (22; 22').

8. Le dispositif de protection contre les démarrages répétés (1) selon la septième revendication, dans lequel la rainure extérieure (22) présente un dispositif de retenue (25) extérieur, ou la rainure intérieure (23) un dispositif de retenue (25') intérieur, qui bloque la goupille oscillante (2) dans la seconde position (II) lorsque le moteur du véhicule est activé, ceci empêchant une nouvelle rotation du cylindre de verrouillage de la seconde position (II) vers la troisième position (III), et qui libère de nouveau la goupille oscillante (2) lors du passage par la position ACC (ACC), ceci permettant une nouvelle rotation du cylindre de verrouillage de la seconde position (II) vers la troisième position (III).

9. Le dispositif de protection contre les démarrages répétés (1) selon l'une quelconque des revendications précédentes, dans lequel le premier élément d'engagement (10; 30; 30') et le second élément d'engagement (20; 20'; 40; 40') présentent un axe commun de rotation (R).

10. Le dispositif de protection contre les démarrages répétés (1) selon l'une quelconque des revendications précédentes, dans lequel le premier élément d'engagement (10; 30; 30'), au moyen de la goupille oscillante (2), et le second élément d'engagement (20; 20'; 40; 40'), au moyen d'autres évidements, forment une indexation à l'intérieur de la coulisse de commande (21, 22, 23, 24; 21', 22', 23', 24').
